(19) Europäisches Patentamt

European Patent Office

Office européen des brevets

(11) **EP 4 715 348 A1**

(12) **EUROPEAN PATENT APPLICATION**

(43) Date of publication:
**25.03.2026 Bulletin 2026/13**

(21) Application number: **25200179.7**

(22) Date of filing: **04.09.2025**

(51) International Patent Classification (IPC):
**G01J 3/02** (2006.01)   **G01J 3/10** (2006.01)
**G01J 3/12** (2006.01)   **G01J 11/00** (2006.01)

(52) Cooperative Patent Classification (CPC):
**G01J 11/00; G01J 3/0297; G01J 3/10; G01J 3/12;**
G01J 2003/1204; G01J 2003/1213

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.09.2024 JP 2024164909**

(71) Applicants:
 • **Hamamatsu Photonics K.K.**
   **Hamamatsu-shi, Shizuoka 435-8558 (JP)**
 • **Vrije Universiteit Brussel**
   **1050 Brussel (BE)**

(72) Inventors:
 • **Watanabe, Koyo**
   **Hamamatsu-shi, Shizuoka, 435-8558 (JP)**
 • **Niigaki, Ryu**
   **Hamamatsu-shi, Shizuoka, 435-8558 (JP)**
 • **Vermeulen, Nathalie**
   **1050 Brussel (BE)**
 • **Thienpont, Hugo**
   **1050 Brussel (BE)**

(74) Representative: **Grünecker Patent- und Rechtsanwälte**
   **PartG mbB**
   **Leopoldstraße 4**
   **80802 München (DE)**

(54) **WAVELENGTH DISPERSION MEASUREMENT APPARATUS AND WAVELENGTH DISPERSION MEASUREMENT METHOD**

(57)    A wavelength dispersion measurement apparatus 1C includes a light source 10, a light pulse train generation unit 20, an optical amplifier 30, a measurement unit 40, a computing unit 50, a spectrometer 60, and a control unit 70. The light pulse train generation unit 20 generates a light pulse train including a first light pulse and a second light pulse based on a light pulse output from the light source 10. The spectrometer 60 measures a spectrum of the light pulse train output from the light pulse train generation unit 20 after passing through the optical amplifier 30. The control unit 70 controls generation of the light pulse train by the light pulse train generation unit 20 such that a spectrum shape of each of the first light pulse and the second light pulse is symmetric, based on the spectrum measured by the spectrometer 60. Thus, a wavelength dispersion measurement apparatus capable of accurately measuring a wavelength dispersion even for a sample in which a nonlinear optical phenomenon is likely to occur is realized.

**Fig.9**

EP 4 715 348 A1

**Description**

TECHNICAL FIELD

The present disclosure relates to a wavelength dispersion measurement apparatus and a wavelength dispersion measurement method.

BACKGROUND

As an apparatus for measuring a wavelength dispersion of a sample, an apparatus described in Patent Document 1 is known. The wavelength dispersion measurement apparatus described in this document generates a light pulse train including a first light pulse and a second light pulse having peak wavelengths different from each other, propagates the light pulse train through the sample, obtains a time interval between respective peaks of the first light pulse and the second light pulse in a temporal waveform of the light pulse train after the propagation, and determines the wavelength dispersion of the sample based on the time interval and the like.

Patent Document 1: Japanese Patent Application Laid-Open Publication No. 2020-169946

Non Patent Document 1: Thorlabs, Inc., "Erbium-Doped Fiber Amplifiers (EDFA)", [online], [retrieval date: August 2, 2024], <URL: https://www.thorlabs.cojp/newgrouppage9.cfm?objectgroup_id=10680 &pn=EDFA100P>

SUMMARY

The present inventors attempted to measure the wavelength dispersion of various samples by using the wavelength dispersion measurement apparatus described above, and found that, for some samples, a nonlinear optical phenomenon is easily caused by a measurement probe light pulse, making it impossible to accurately obtain the wavelength dispersion in some cases.

Therefore, the present inventors attempted to take measures to perform the wavelength dispersion measurement while suppressing the occurrence of the nonlinear optical phenomenon in the sample, however, it was found that the simple measure of merely reducing an intensity of the probe light was insufficient to accurately measure the wavelength dispersion.

An object of an embodiment is to provide a wavelength dispersion measurement apparatus and a wavelength dispersion measurement method capable of accurately measuring a wavelength dispersion even for a sample in which a nonlinear optical phenomenon is likely to occur.

An embodiment is a wavelength dispersion measurement apparatus. The wavelength dispersion measurement apparatus is an apparatus for propagating a light pulse train including a first light pulse and a second light pulse having peak wavelengths different from each other through a sample, and measuring a wavelength dispersion of the sample based on a shape of an autocorrelation of a temporal waveform of the light pulse train after propagation or a shape of a cross-correlation between the temporal waveform of the light pulse train after propagation and a temporal waveform of a reference light pulse, and includes (1) a light source for outputting a light pulse having a wavelength band; (2) a light pulse train generation unit for generating and outputting, based on the light pulse output from the light source, a light pulse train including a first light pulse having a peak of a spectrum at a first wavelength within the wavelength band and a second light pulse having a peak of a spectrum at a second wavelength within the wavelength band; (3) an optical amplifier for amplifying and outputting the light pulse train output from the light pulse train generation unit; (4) a spectrometer for measuring a spectrum of the light pulse train output from the optical amplifier; and (5) a control unit for controlling generation of the light pulse train by the light pulse train generation unit such that, in the spectrum measured by the spectrometer, a spectrum shape of the first light pulse is symmetric with respect to the first wavelength, and a spectrum shape of the second light pulse is symmetric with respect to the second wavelength.

An embodiment is a wavelength dispersion measurement method. The wavelength dispersion measurement method is a method for propagating a light pulse train including a first light pulse and a second light pulse having peak wavelengths different from each other through a sample, and measuring a wavelength dispersion of the sample based on a shape of an autocorrelation of a temporal waveform of the light pulse train after propagation or a shape of a cross-correlation between the temporal waveform of the light pulse train after propagation and a temporal waveform of a reference light pulse, and includes (1) a light pulse train generation step of generating and outputting, by a light pulse train generation unit, based on a light pulse having a wavelength band output from a light source, a light pulse train including a first light pulse having a peak of a spectrum at a first wavelength within the wavelength band and a second light pulse having a peak of a spectrum at a second wavelength within the wavelength band; (2) an optical amplification step of amplifying and outputting, by an optical amplifier, the light pulse train output from the light pulse train generation unit; (3) a spectrometry step of measuring, by a spectrometer, a spectrum of the light pulse train output from the optical amplifier; and (4) a control step of controlling generation of the light pulse train by the light pulse train generation unit such that, in the spectrum measured by the spectrometer, a spectrum shape of the first light pulse is symmetric with respect to the first wavelength, and a spectrum shape of the second light pulse is symmetric with respect to the second wavelength.

According to the wavelength dispersion measurement apparatus and the wavelength dispersion measurement method of the embodiments, it is possible to accurately measure a wavelength dispersion even for a sample in which a nonlinear optical phenomenon is likely to occur.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

## BRIEF DESCRIPTION OF THE DRAWINGS

FIG. 1 is a diagram illustrating a configuration of a wavelength dispersion measurement apparatus 1A.

FIG. 2 is a diagram illustrating a configuration example of a light pulse train generation unit 20.

FIG. 3 is a diagram illustrating a configuration example of a measurement unit 40.

FIG. 4 is a graph showing an example of a relationship between an input light intensity and a light transmission efficiency in an optical waveguide formed of InP.

FIG. 5 is a diagram illustrating a configuration of a wavelength dispersion measurement apparatus 1B.

FIG. 6 is a graph showing a result of a wavelength dispersion measurement performed by using the wavelength dispersion measurement apparatus 1B.

FIG. 7 is a graph showing an example of a wavelength dependence of a gain of an optical amplifier.

FIG. 8 is a graph showing a result of a simulation performed for an influence of a change of a spectrum shape on a wavelength dispersion measured value in the case in which the wavelength dispersion measurement is performed by using the wavelength dispersion measurement apparatus 1B.

FIG. 9 is a diagram illustrating a configuration of a wavelength dispersion measurement apparatus 1C.

FIG. 10 is a flowchart illustrating an example of a setting method of an amplitude modulation pattern by a control unit 70 of the wavelength dispersion measurement apparatus 1C.

FIG. 11 is a graph schematically showing a target spectrum determined in a step S2, and a spectrum $S_i$ measured in a step S5.

FIG. 12 is a graph showing a result of a simulation performed for a relationship between an RMS error and a wavelength dispersion measurement error.

FIG. 13A and FIG. 13B are diagrams showing (A) a spectrum of a light pulse train output from the light pulse train generation unit 20, and (B) a spectrum of a light pulse train output from the optical amplifier 30, in the wavelength dispersion measurement performed by using the wavelength dispersion measurement apparatus 1C.

FIG. 14A and FIG. 14B are diagrams showing (A) a shape of an autocorrelation of a temporal waveform of the light pulse train measured by the measurement unit 40 in the case in which a sample S is not placed, and (B) a shape of an autocorrelation of a temporal waveform of the light pulse train measured by the measurement unit 40 in the case in which the sample S is placed, in the wavelength dispersion measurement performed by using the wavelength dispersion measurement apparatus 1C.

FIG. 15 is a graph showing a result of the wavelength dispersion measurement performed by using the wavelength dispersion measurement apparatus 1C.

FIG. 16A and FIG. 16B are diagrams for describing an intensity ratio of peaks of a first light pulse and a second light pulse in a temporal waveform of the light pulse train output from the optical amplifier 30.

FIG. 17A and FIG. 17B are diagrams showing a relationship between a wavelength dependence of a gain of the optical amplifier 30 and a spectrum of each of the first light pulse and the second light pulse.

FIG. 18 is a diagram illustrating another configuration example of the measurement unit 40.

## DETAILED DESCRIPTION

Hereinafter, embodiments of a wavelength dispersion measurement apparatus and a wavelength dispersion measurement method will be described in detail with reference to the accompanying drawings. In the description of the drawings, the same elements will be denoted by the same reference signs, and redundant description will be omitted. The present invention is not limited to these examples, and the Claims, their equivalents, and all the changes within the scope are intended as would fall within the scope of the present invention.

First, a configuration of each of wavelength dispersion measurement apparatuses 1A and 1B according to comparative examples will be described, and subsequently, a configuration of a wavelength dispersion measurement apparatus 1C according to an embodiment will be described.

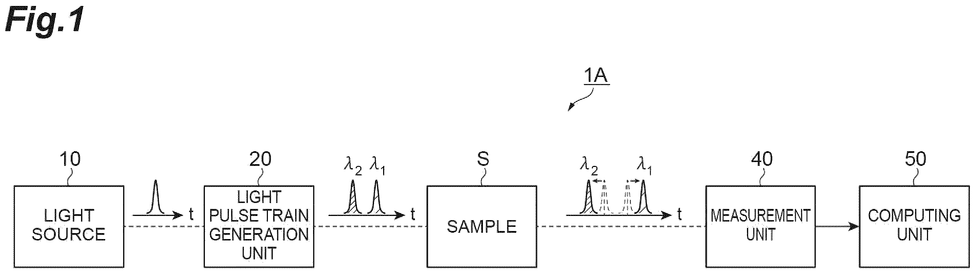

FIG. 1 is a diagram illustrating a configuration of a wavelength dispersion measurement apparatus 1A. The wavelength dispersion measurement apparatus 1A illustrated in this diagram includes a light source 10, a light pulse train generation unit 20, a measurement unit 40, and a computing unit 50. The wavelength dispersion measurement apparatus 1A measures a wavelength dispersion of a sample S which is placed on an optical path between the light pulse train generation unit 20 and the measurement unit 40.

The light source 10 repeatedly outputs a light pulse having a band (a wavelength band). The light source 10 may be, for example, a super continuum (SC) light source, an amplified spontaneous emission (ASE) light source, or the like.

The light pulse train generation unit 20 generates, based on the light pulse output from the light source 10, a light pulse train including a first light pulse having a peak of a spectrum at a first wavelength $\lambda_1$ and a second light pulse having a peak of a spectrum at a second wavelength $\lambda_2$, and outputs the generated light pulse train. The first wavelength $\lambda_1$ and the second wavelength $\lambda_2$ are within the wavelength band of the light pulse output from the light source 10, and are wavelengths different from each other. The first light pulse and the second light pulse may have a time difference at the time of output from the light pulse train generation unit 20. A specific configuration example of the light pulse train generation unit 20 will be described later.

The measurement unit 40 inputs the light pulse train output from the light pulse train generation unit 20 after being propagated through the sample S, and measures a time interval between the respective peaks of the first light pulse and the second light pulse in a temporal waveform of the light pulse train. The measurement unit 40 may have a configuration including an autocorrelator for obtaining a shape of an autocorrelation of the temporal waveform of the light pulse train, or may also have a configuration including a cross-correlator for obtaining a shape of a cross-correlation between the temporal waveform of the light pulse train and a temporal waveform of a reference light pulse. A specific configuration example of the measurement unit 40 will be described later.

The computing unit 50 performs required processing based on the time interval measured by the measurement unit 40, a difference between the first wavelength $\lambda_1$ and the second wavelength $\lambda_2$, and a length of a light propagation path in the sample S, and determines the wavelength dispersion of the sample S. The wavelength dispersion which is obtained in this case is a value of the wavelength dispersion at an intermediate wavelength $((\lambda_1 + \lambda_2) / 2)$ between the first wavelength $\lambda_1$ and the second wavelength $\lambda_2$.

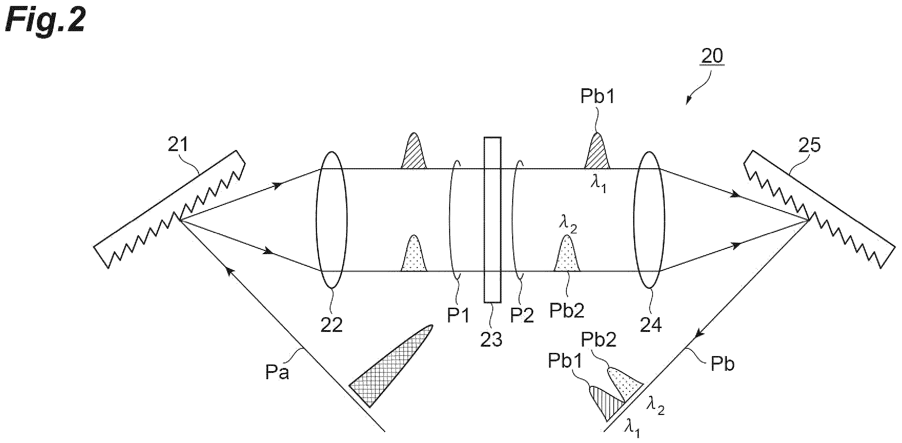

FIG. 2 is a diagram illustrating a configuration example of the light pulse train generation unit 20. The light pulse train generation unit 20 illustrated in this diagram includes a diffraction grating 21, a lens 22, a spatial light modulator 23, a lens 24, and a diffraction grating 25.

The diffraction grating 21 inputs the light pulse Pa output from the light source 10, and diffracts the light pulse Pa at a diffraction angle according to the wavelength, and thus, spatially separates the light pulse Pa by the wavelength, and outputs the light pulse of each wavelength in a direction different depending on the wavelength. The lens 22 inputs and collimates the light pulses of the respective wavelengths output from the diffraction grating 21 in the directions different from each other depending on the wavelength, and outputs the collimated light P1 to the spatial light modulator 23.

The spatial light modulator 23 has a modulation plane capable of modulating an amplitude of the light at each pixel position. An amplitude modulation pattern on the modulation plane can be set by an electrical signal provided from the outside. The spatial light modulator 23 inputs the light P1 collimated and output by the lens 22 on the modulation plane, performs the amplitude modulation according to the wavelength of the light on the modulation plane, and outputs the light P2 after the modulation. The spatial light modulator 23 may also be capable of performing phase modulation in addition to the amplitude modulation of the light at each pixel position.

The spatial light modulator 23 can generate the first light pulse Pb1 and the second light pulse Pb2 by setting the amplitude modulation amount according to the wavelength. Further, the spatial light modulator 23 can set the time difference between the first light pulse Pb1 and the second light pulse Pb2 by making the phase modulation amounts in the wavelength bands respectively centered at the wavelength $\lambda_1$ and the wavelength $\lambda_2$ different from each other.

The lens 24 focuses the light P2 (the first light pulse Pb1 and the second light pulse Pb2) output from the spatial light modulator 23 onto a common position on the diffraction grating 25. The diffraction grating 25 respectively diffracts the first light pulse Pb1 and the second light pulse Pb2, combines the light pulses, and outputs as the light pulse train Pb on the same optical path.

In the configuration example illustrated in FIG. 2, the diffraction grating 21 is used as a separating unit for spatially separating the light pulse output from the light source 10 by the wavelength, and further, a prism may be used as the separating unit instead. In the configuration example illustrated in FIG. 2, the diffraction grating 25 is used as a combining unit for combining the first light pulse Pb1 and the second light pulse Pb2 output from the spatial light modulator 23 and outputting them as the light pulse train Pb on the same optical path, and further, a prism may be used as the combining unit instead.

Further, a concave mirror may be used instead of each of the lenses 22 and 24. Further, in the configuration example illustrated in FIG. 2, the spatial light modulator 23 of a transmission type is used, and further, a spatial light modulator of a reflection type may be used instead, and in this case, the lens 22 and the lens 24 can be shared, and the diffraction grating 21 and the diffraction grating 25 can be shared.

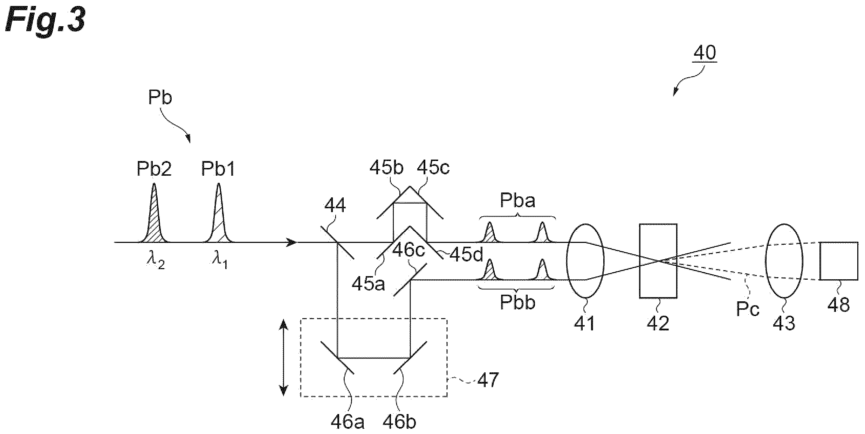

FIG. 3 is a diagram illustrating a configuration example of the measurement unit 40. The measurement unit 40 illustrated in this diagram has a configuration including the autocorrelator, and includes a lens 41, a nonlinear optical element 42, a lens 43, a beam splitter 44, mirrors 45a to 45d, mirrors 46a to 46c, a stage 47, and a photodetector 48.

The beam splitter 44 inputs the light pulse train Pb output from the light pulse train generation unit 20 after being propagated through the sample S. The light pulse train Pb includes the first light pulse Pb1 and the second light pulse Pb2. The beam splitter 44 splits the input light pulse train Pb into two light beams of a light pulse train Pba and a light pulse train Pbb. The beam splitter 44 outputs one light pulse train of the light pulse train Pba to the mirror 45a, and outputs the other light pulse train of the light pulse train Pbb to the mirror 46a. A splitting ratio of the beam splitter 44 may be set to 1:1.

The one light pulse train of the light pulse train Pba is sequentially reflected by the mirrors 45a to 45d, and input to the lens 41. The other light pulse train of the light pulse train Pbb is sequentially reflected by the mirrors 46a to 46c, and input to the lens 41. The mirrors 46a and 46b are mounted on the stage 47. The stage 47 is movable in a direction indicated by a double-headed arrow in the diagram.

By the movement of the stage 47, an optical path length difference is set between an optical path of the light pulse train Pba from the beam splitter 44 through the mirrors 45a to 45d to the lens 41, and an optical path of the light pulse train Pbb from the beam splitter 44 through the mirrors 46a to 46c to the lens 41. That is, by the movement of the stage 47, a time difference between the timing at which the light pulse train Pba reaches the nonlinear optical element 42 and the timing at which the light pulse train Pbb reaches the nonlinear optical element 42 can be set to any value.

The lens 41 focuses the light pulse train Pba and the light pulse train Pbb onto a common position of the nonlinear optical element 42. The light pulse train Pba and the light pulse train Pbb are incident on the nonlinear optical element 42 from directions different from each other. As a result, a second harmonic is generated in the nonlinear optical element 42. An intensity of the generated second harmonic is set according to a magnitude of a correlation between a temporal waveform of the light pulse train Pba and a temporal waveform of the light pulse train Pbb. The second harmonic (correlation light Pc) output from the nonlinear optical element 42 passes through the lens 43, and is received by the photodetector 48.

As the nonlinear optical element 42, for example, a KTP ($KTiOPO_4$) crystal, an LBO ($LiB_3O_5$) crystal, a BBO ($\beta$-$BaB_2O_4$) crystal, or the like may be used. In addition, a fluorescent material which emits fluorescence as the correlation light Pc may be used instead of the nonlinear optical element 42. As the fluorescent material, for example, coumarin, stilbene, rhodamine, or the like may be used.

The photodetector 48 receives the correlation light Pc for each light pulse train Pb, and outputs an electrical signal having a value according to the intensity of the correlation light Pc. When the difference between the respective times at which the light pulse train Pba and the light pulse train Pbb reach the lens 41 is set to each value by the movement of the stage 47, the value of the electrical signal output from the photodetector 48 receiving the correlation light Pc is obtained.

A relationship between the time difference set to a different value for each light pulse train and the output electrical signal value from the photodetector 48 represents the autocorrelation of the temporal waveform of the light pulse train Pb. Based on the shape of the autocorrelation of the temporal waveform of the light pulse train Pb, the time interval between the respective peaks of the first light pulse Pb1 and the second light pulse Pb2 included in the light pulse train Pb can be obtained.

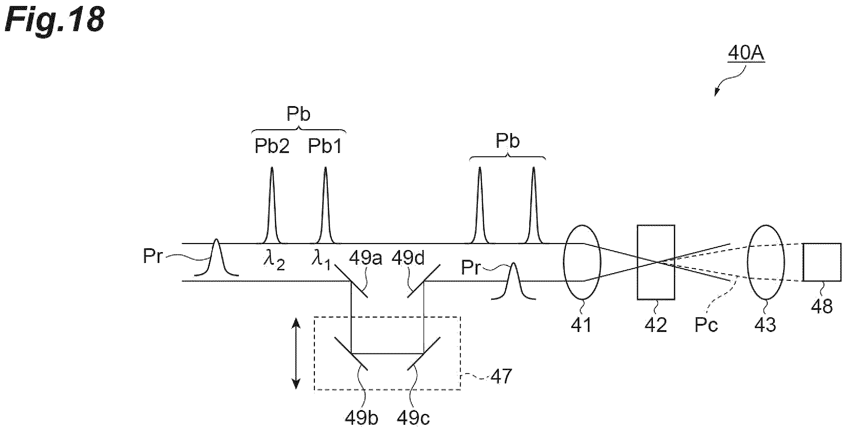

FIG. 18 is a diagram illustrating another configuration example of the measurement unit 40. The measurement unit 40A illustrated in this diagram has a configuration including the cross-correlator, and includes the lens 41, the nonlinear optical element 42, the lens 43, mirrors 49a to 49d, the stage 47, and the photodetector 48.

The light pulse train Pb output from the light pulse train generation unit 20 after being propagated through the sample S is input to the lens 41. The light pulse train Pb includes the first light pulse Pb1 and the second light pulse Pb2. In addition, a reference light pulse Pr is sequentially reflected by the mirrors 49a to 49d, and input to the lens 41. The reference light pulse Pr is a single pulse, and may be a light pulse which is split by a beam splitter provided between the light source 10 and the light pulse train generation unit 20.

The mirrors 49b and 49c are mounted on the stage 47. The stage 47 is movable in the direction indicated by the double-headed arrow in the diagram. By the movement of the stage 47, the time difference between the timing at which the light pulse train Pb reaches the nonlinear optical element 42 and the timing at which the reference light pulse Pr reaches the nonlinear optical element 42 can be set to any value.

The lens 41 focuses the light pulse train Pb and the reference light pulse Pr onto a common position of the nonlinear optical element 42. The light pulse train Pb and the reference light pulse Pr are incident on the nonlinear optical element 42 from directions different from each other. As a result, the second harmonic is generated in the nonlinear optical element 42. The intensity of the generated second harmonic is set according to a magnitude of a cross-correlation between a temporal waveform of the light pulse train Pb and a temporal waveform of the reference light pulse Pr. The second harmonic (the correlation light Pc) output from the nonlinear optical element 42 passes through the lens 43, and is received by the photodetector 48.

The photodetector 48 receives the correlation light Pc for each light pulse train Pb, and outputs the electrical signal having the value according to the intensity of the correlation light Pc. When the difference between the respective times at which the light pulse train Pb and the reference light pulse Pr reach the lens 41 is set to each value by the movement of the stage 47, the value of the electrical signal output from the photodetector 48 receiving the correlation light Pc is obtained.

A relationship between the time difference set to a different value for each light pulse train and the output electrical signal value from the photodetector 48 represents the cross-correlation between the temporal waveform of the light pulse train Pb and the temporal waveform of the reference light pulse Pr. Based on the shape of the cross-correlation, the time interval between the respective peaks of the first light pulse Pb1 and the second light pulse Pb2 included in the light pulse train Pb can be obtained.

The present inventors attempted to measure the wavelength dispersion of various samples by using the wavelength dispersion measurement apparatus 1A (FIG. 1) described above, and found that, depending on the sample, it may not be possible to accurately obtain the wavelength dispersion. For example, in the case in which an optical waveguide formed of SiN was used as the sample S, the wavelength dispersion of the optical waveguide could be obtained relatively accurately, and on the other hand, in the case in which an optical waveguide formed of Si or InP was used as the sample S, the wavelength dispersion of the optical waveguide could not be obtained accurately. This is considered to be due to the following reasons.

That is, in the case of the optical waveguide formed of Si or InP, when the light pulse train is propagated through the optical waveguide, the nonlinear optical phenomenon (for example, two-photon absorption) occurs, and the intensity of the light pulse train output after being propagated through the optical waveguide is largely reduced. In the case in which the intensity of the light pulse train input to the measurement unit 40 is low, the measurement of the shape of the autocorrelation of the temporal waveform of the light pulse train becomes inaccurate, and the measurement of the time interval between the peaks of the first light pulse Pb1 and the second light pulse Pb2 also becomes inaccurate, and as a result, the measurement of the wavelength dispersion also becomes inaccurate.

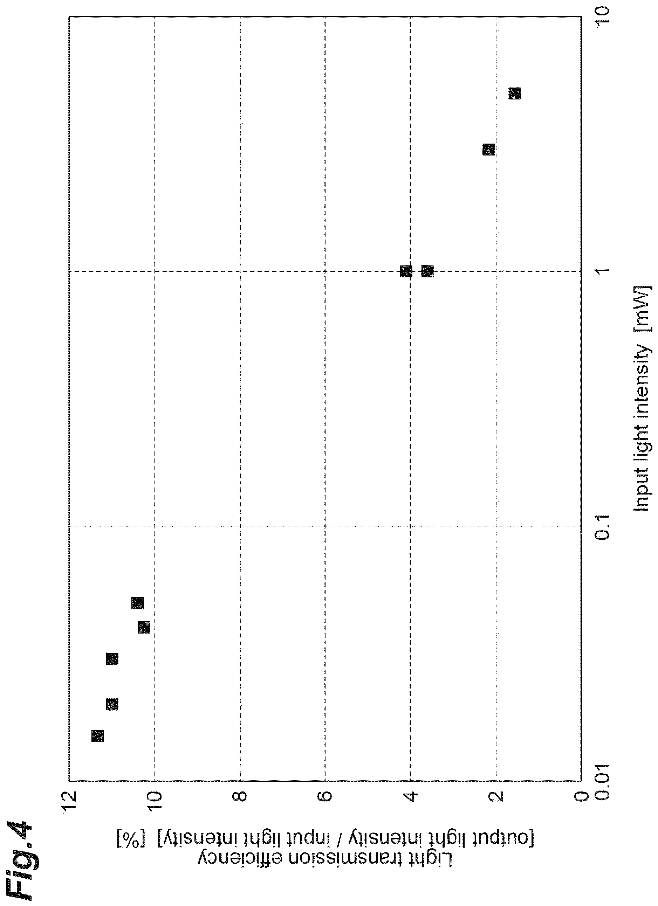

FIG. 4 is a graph showing an example of a relationship between an input light intensity and a light transmission efficiency in the optical waveguide formed of InP. The light transmission efficiency is obtained by dividing an intensity of the output light from the optical waveguide by an intensity of the input light to the optical waveguide. The light pulse train having a center wavelength of 1540 nm is input to the optical waveguide. As shown in the graph of FIG. 4, the larger the input light intensity, the lower the light transmission efficiency. This is considered to be an effect due to the nonlinear optical phenomenon (in particular, the two-photon absorption).

In order to measure the shape of the autocorrelation of the temporal waveform of the light pulse train in the measurement unit 40, an average output intensity from the sample needs to be, for example, about 500 $\mu$W or more. However, in the case of this example, the undesirable nonlinear optical phenomenon occurs, and in addition, with an average input intensity of 1 mW, the average output intensity is only 40 $\mu$W. In the case in which the average input intensity is reduced to about 0.1 mW, the nonlinear effect becomes smaller and the light transmission efficiency improves, but the average output intensity is only about 10 $\mu$W, and in this case also, it is difficult to detect the shape of the autocorrelation.

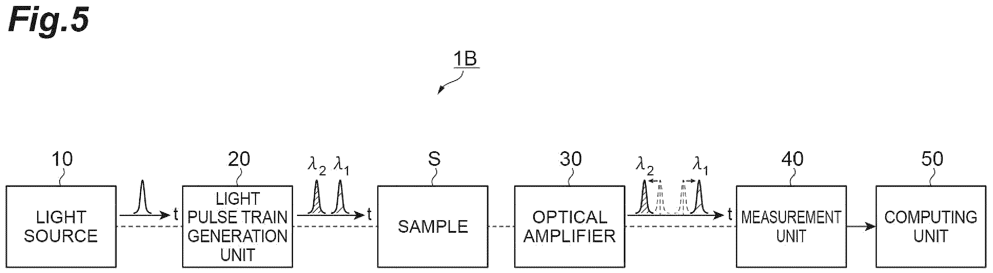

In order to suppress the occurrence of the nonlinear optical phenomenon in the sample S, the present inventors conceived a configuration in which the intensity of the light pulse train input to the sample S is made sufficiently small, and in addition, in order to accurately measure the shape of the autocorrelation of the temporal waveform of the light pulse train in the measurement unit 40, an optical amplifier 30 is provided on the optical path between the sample S and the measurement unit 40, as illustrated in the configuration of FIG. 5.

FIG. 5 is a diagram illustrating a configuration of a wavelength dispersion measurement apparatus 1B. As compared with the configuration of the wavelength dispersion measurement apparatus 1A (FIG. 1), the wavelength dispersion measurement apparatus 1B illustrated in this diagram is different in that the apparatus further includes an optical amplifier 30. The optical amplifier 30 inputs the light pulse train output from the light pulse train generation unit 20 after being propagated through the sample S, amplifies the light pulse train, and outputs the amplified light pulse train to the measurement unit 40.

As the optical amplifier 30, for example, an optical fiber amplifier (OFA), a semiconductor optical amplifier (SOA), or the like may be used. Further, examples of the OFA include a rare-earth-doped fiber amplifier such as an erbium-doped fiber amplifier (EDFA), and a fiber Raman amplifier (FRA).

The present inventors used the wavelength dispersion measurement apparatus 1B (FIG. 5) described above, set the intensity of the light pulse output from the light source 10 to be sufficiently small so that the nonlinear optical phenomenon does not occur in the sample S, and in addition, set the gain of the optical amplifier 30 to an appropriate value so that the intensity of the light pulse train input to the measurement unit 40 is sufficiently large, and attempted to measure the wavelength dispersion of various samples.

However, in the case in which the optical waveguide formed of Si or InP was used as the sample S, even when the wavelength dispersion measurement apparatus 1B (FIG. 5) was used, the wavelength dispersion of the optical waveguide could not be obtained accurately. Moreover, in the case in which the optical waveguide formed of SiN was used as the sample S, although the wavelength dispersion of the optical waveguide could be obtained relatively accurately when the wavelength dispersion measurement apparatus 1A (FIG. 1) was used, the wavelength dispersion of the optical waveguide could not be obtained accurately when the wavelength dispersion measurement apparatus 1B (FIG. 5) was used.

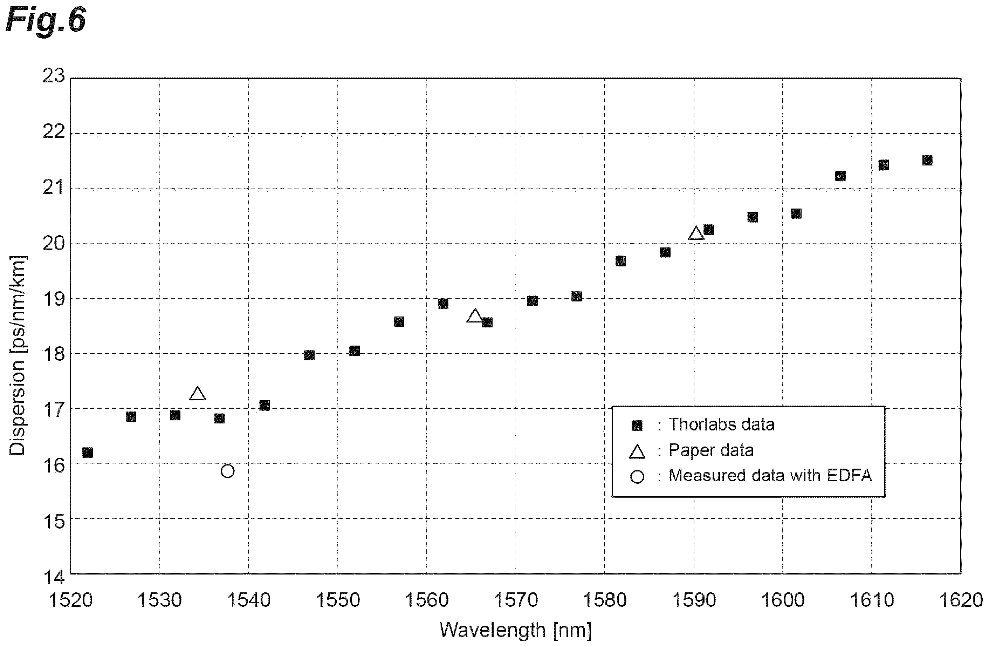

FIG. 6 is a graph showing the results of the wavelength dispersion measurement performed by using the wavelength dispersion measurement apparatus 1B. In this case, a polarization maintaining optical fiber of Thorlabs was used as the sample S. As the optical amplifier 30, an erbium-doped fiber amplifier, EDFA100P, of Thorlabs was used. In the graph of FIG. 6, in addition to the measured data obtained by using EDFA100P, data provided by Thorlabs and data described in the paper are also shown. As shown in this graph, the measured data obtained by using EDFA100P is different largely from the Thorlabs provided data and the paper described data.

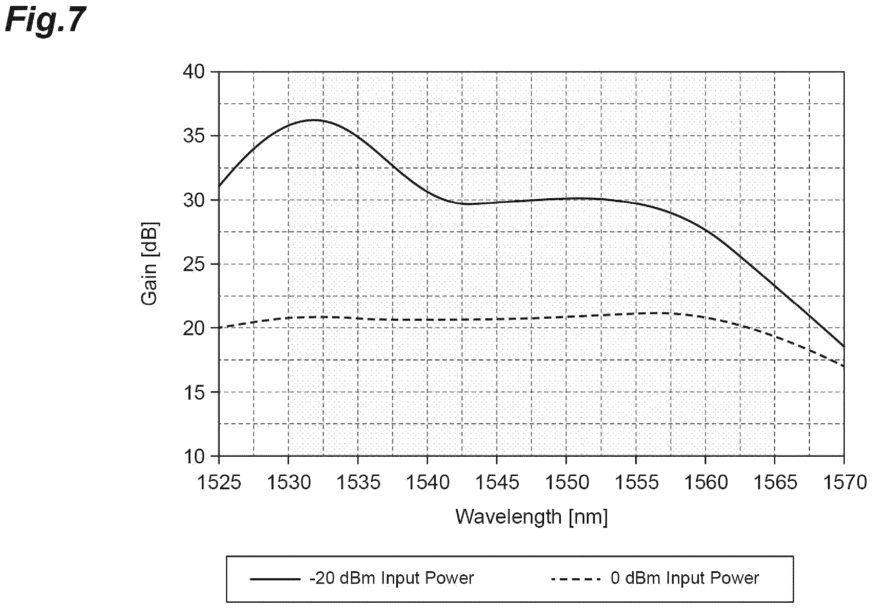

The above phenomenon is considered to be caused by the following. That is, in general, an optical amplifier has gain in a predetermined wavelength band, and the gain in the above wavelength band has wavelength dependence. FIG. 7 is a graph showing an example of the wavelength dependence of the gain of the optical amplifier. The graph of FIG. 7 is described in Non Patent Document 1, which is the data sheet of EDFA100P of Thorlabs. As shown in this graph, the gain of the optical amplifier has the wavelength dependence.

In general, the optical amplifier is configured by combining an optical amplification medium having the gain and a gain flattening filter, and as a whole, flattening of the wavelength dependence of the gain is attempted. However, even with the above configuration, the optical amplifier cannot completely flatten the wavelength dependence of the gain. Further, the wavelength dependence of the gain varies depending on the input light intensity.

Therefore, even when the spectrum of each of the first light pulse and the second light pulse output from the light pulse train generation unit 20 and input to the sample S has a desirable shape, due to the wavelength dependence of the gain of the optical amplifier 30, the spectrum of each of the first light pulse and the second light pulse output from the optical amplifier 30 and input to the measurement unit 40 has a shape different from the desirable shape. It is considered that the change of the spectrum of each of the first light pulse and the second light pulse output from the optical amplifier 30 to an undesirable shape is the cause of the inaccurate measurement of the shape of the autocorrelation of the temporal waveform of the light pulse train in the measurement unit 40. The present inventors conducted a simulation to confirm the above.

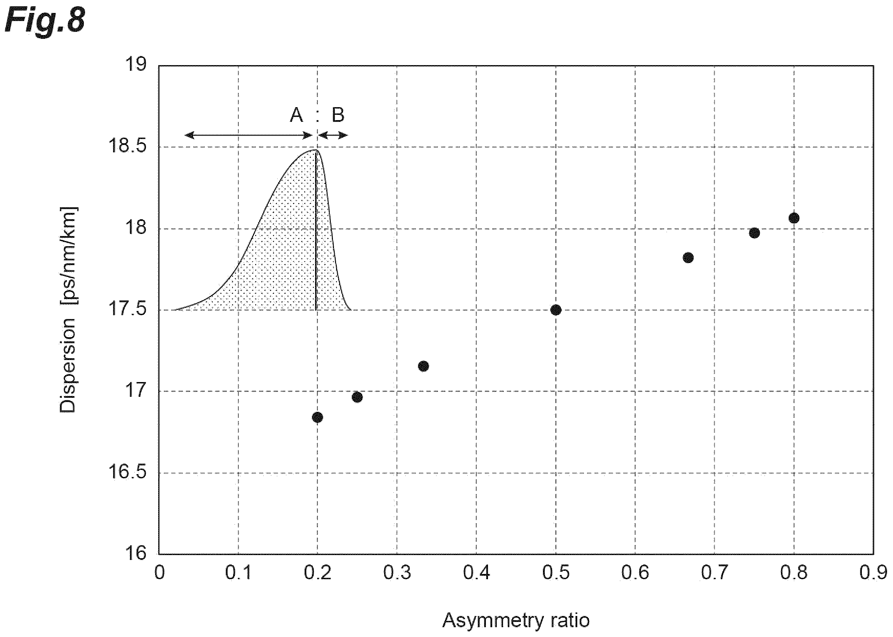

FIG. 8 is a graph showing the results of the simulation performed for the influence of change of the spectrum shape on the wavelength dispersion measured value in the case in which the wavelength dispersion measurement is performed by using the wavelength dispersion measurement apparatus 1B. In this case, the sample S having the wavelength dispersion value of 17.5 ps/nm/km was assumed. In the light pulse train input to the measurement unit 40, it was assumed that, for the spectrum of one of the light pulses, symmetry is maintained with respect to the peak wavelength, and on the other hand, for the spectrum of the other of the light pulses, symmetry is not maintained with respect to the peak wavelength and the spectrum becomes asymmetric.

The symmetry of the spectrum of the light pulse was defined as a ratio (B/A) of a spectrum area A on the shorter wavelength side with respect to the peak wavelength and a spectrum area B on the longer wavelength side with respect to the peak wavelength. When the spectrum of the light pulse is symmetric with respect to the peak wavelength, the value of the ratio (B/A) is 1. The horizontal axis of the graph indicates the ratio (B/A) representing the symmetry of the spectrum, and the vertical axis indicates the simulated value of the wavelength dispersion. As shown in this graph, in order to accurately determine the wavelength dispersion, it is necessary that the spectrum of each of the light pulses in the light pulse train input to the measurement unit 40 has good symmetry.

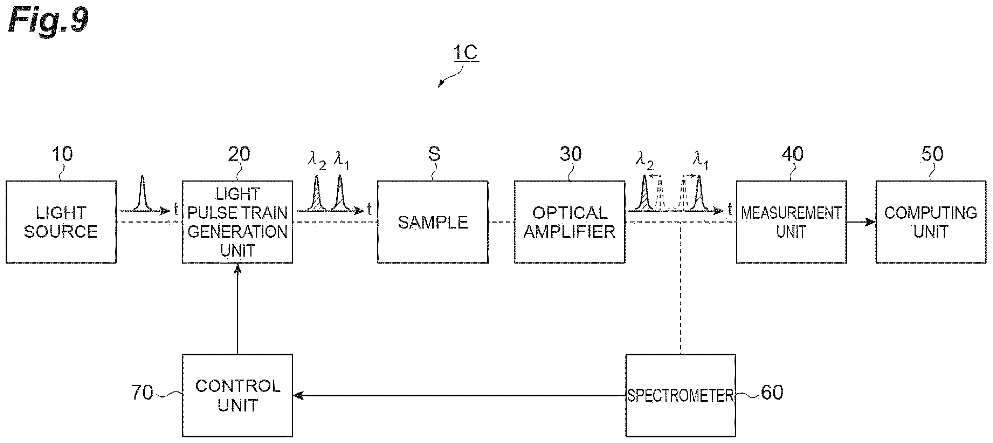

Based on the above findings, the present inventors conceived a configuration of a wavelength dispersion measurement apparatus 1C illustrated in FIG. 9. FIG. 9 is a diagram illustrating a configuration of a wavelength dispersion measurement apparatus 1C. As compared with the configuration of the wavelength dispersion measurement apparatus 1B (FIG. 5), the wavelength dispersion measurement apparatus 1C illustrated in this diagram is different in that the apparatus further includes a spectrometer 60 and a control unit 70.

The spectrometer 60 measures the spectrum of the light pulse train output from the optical amplifier 30. A beam splitter may be provided on the optical path between the optical amplifier 30 and the measurement unit 40. In this case, the beam splitter splits the light pulse train output from the optical amplifier 30, outputs one split light to the measurement unit 40, and outputs the other split light to the spectrometer 60. In addition, without providing the above beam splitter, the spectrometer 60 may be arranged in place of the measurement unit 40.

The control unit 70 controls the generation of the light pulse train by the light pulse train generation unit 20 based on the spectrum which is measured by the spectrometer 60. Specifically, the control unit 70 controls the generation of the first light pulse Pb1 and the second light pulse Pb2 by the spatial light modulator 23 of the light pulse train generation unit 20 such that, in the spectrum measured by the spectrometer 60, the spectrum shape of the first light pulse becomes symmetric with respect to the first wavelength $\lambda_1$, and further, the spectrum shape of the second light pulse becomes symmetric with respect to the second wavelength $\lambda_2$.

In the above wavelength dispersion measurement apparatus 1C, the generation of the light pulse train by the light pulse train generation unit 20 is adjusted by feedback control using the spectrometer 60 and the control unit 70. That is, the control unit 70 sets the amplitude modulation pattern on the modulation plane of the spatial light modulator 23 such that, in the spectrum measured by the spectrometer 60, the spectrum shape of the first light pulse is symmetric with respect to the first wavelength $\lambda_1$, and the spectrum shape of the second light pulse is symmetric with respect to the second wavelength $\lambda_2$.

The wavelength dependence of the gain of the optical amplifier 30 varies depending on the input light intensity, and thus, it is preferable to repeatedly perform the spectrum measurement by the spectrometer 60 and the setting of the amplitude modulation pattern by the control unit 70. In this case, the sample S may be placed on the optical path between the light pulse train generation unit 20 and the optical amplifier 30, or the sample S may not be placed. After the amplitude modulation pattern on the modulation plane of the spatial light modulator 23 is appropriately set, the wavelength dispersion of the sample S is measured by using the measurement unit 40 and the computing unit 50, in the state in which the sample S is placed on the optical path between the light pulse train generation unit 20 and the optical amplifier 30.

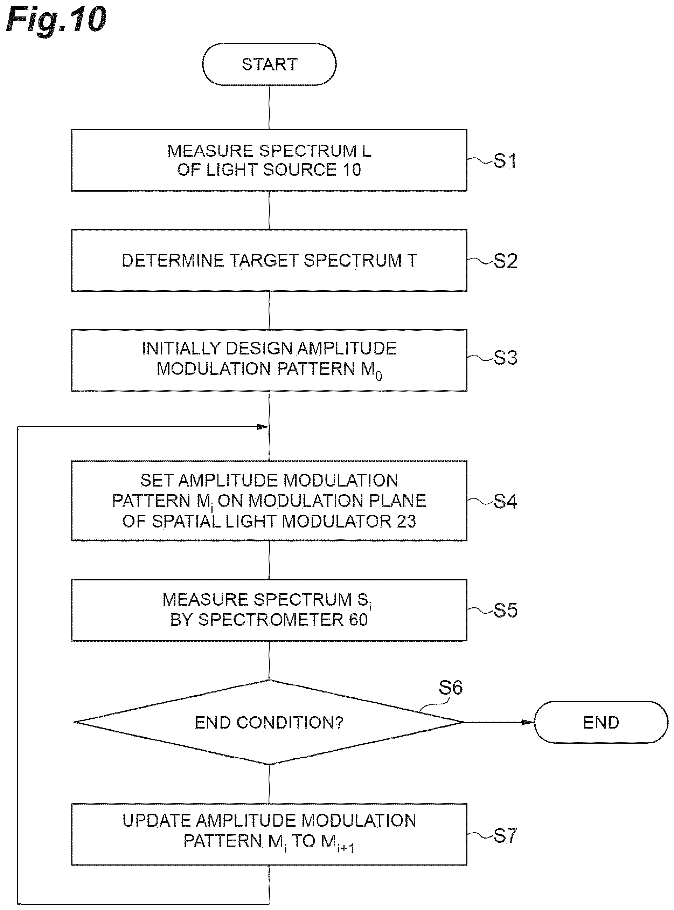

FIG. 10 is a flowchart illustrating an example of a method for setting the amplitude modulation pattern by the control unit 70 provided in the wavelength dispersion measurement apparatus 1C.

In a step S1, a spectrum L of the light pulse output from the light source 10 is measured. In a step S2, a target spectrum T, which is a target for the spectrum of each of the first light pulse and the second light pulse output from the optical amplifier 30, is determined. The target spectrum T has a shape which is symmetric with respect to the peak wavelength, and may be, for example, a Gaussian shape, a sech-type shape, or a hyper-Gaussian shape.

In a step S3, by using the spectrum L measured in the step S1 and the target spectrum T determined in the step S2, an initial amplitude modulation pattern $M_0$ to be set on the modulation plane of the spatial light modulator 23 is designed according to the following Formula (1). In a step S4, the designed amplitude modulation pattern $M_i$ is set on the modulation plane of the spatial light modulator 23. Initially, the amplitude modulation pattern $M_0$ designed in the step S3 is set on the modulation plane of the spatial light modulator 23.

[Formula 1]

$$M_0 = T / L \qquad (1)$$

In a step S5, a spectrum $S_i$ of each of the first light pulse and the second light pulse output from the optical amplifier 30 is measured by the spectrometer 60. A spectrum $S_0$ which is initially measured is a spectrum when the amplitude modulation pattern $M_0$ designed in the step S3 is set on the modulation plane of the spatial light modulator 23.

In a step S6, when the spectrum $S_i$ measured in the step S5 is sufficiently close to the target spectrum T, the process ends, otherwise, the process proceeds to a step S7. In the step S7, an amplitude modulation pattern $M_{i+1}$ is newly designed based on the amplitude modulation pattern $M_i$ according to the following Formula (2). Thereafter, the process returns to the step S4, and the processing of the step S4 and the subsequent steps is performed. The steps S4 to S7 are repeatedly performed until it is determined to end in the step S6.

[Formula 2]

$$M_{i+1} = M_i \cdot T / S_i \qquad (2)$$

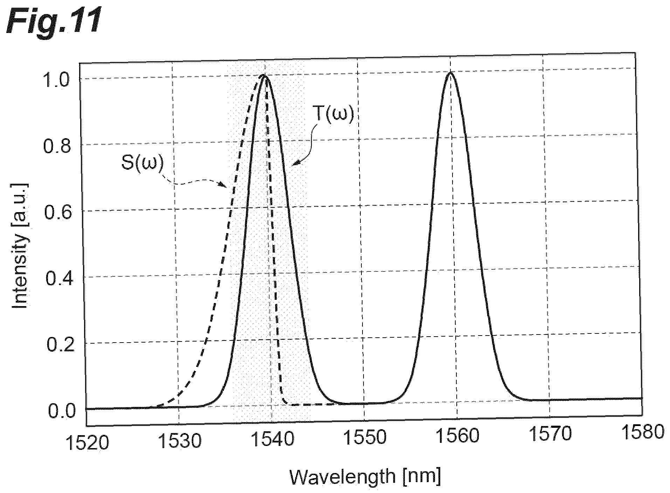

The end determination in the step S6 can be performed, for example, as follows. FIG. 11 is a graph schematically showing the target spectrum determined in the step S2, and the spectrum $S_i$ measured in the step S5.

A magnitude of a difference between the two spectra can be evaluated by using an RMS error (RMS_error) shown in the following Formula (3). When the RMS error of the following Formula (3) becomes smaller than a predetermined value, it can be determined to end. In this Formula, $\omega$ is the angular frequency, $p_1$ is the peak intensity of the target spectrum, $p_2$ is the peak intensity of the measured spectrum $S_i$, and N is the number of data points. The summation in the right side is performed in a range from Sp - $2\sigma$ to Sp + $2\sigma$, where Sp is the peak wavelength of the target spectrum, and $\sigma$ is the standard deviation.

[Formula 3]

$$RMS\_error = \sqrt{\frac{\sum\left(\frac{T(\omega)}{p_1} - \frac{S_i(\omega)}{p_2}\right)^2}{N}} \qquad (3)$$

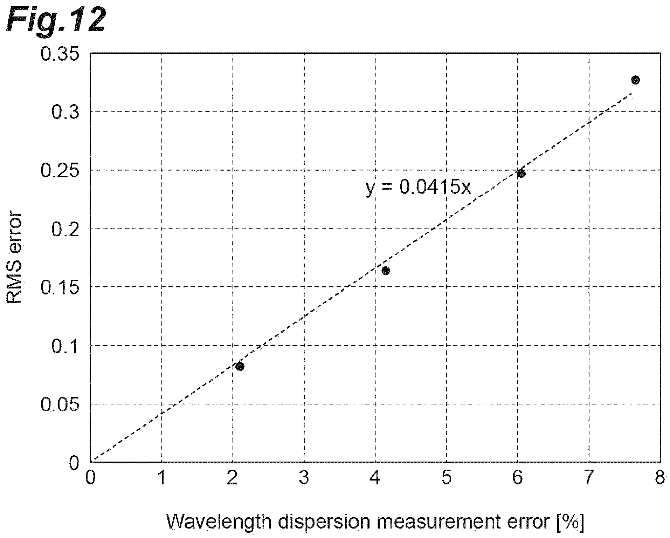

FIG. 12 is a graph showing the results of the simulation performed for a relationship between the RMS error and the wavelength dispersion measurement error. The conditions of the simulation are as follows. A SiN optical waveguide was assumed as the sample S, a length of a light propagation path in the optical waveguide was set to 5 mm, and the wavelength dispersion was set to 2000 ps/nm/km. The shape of the target spectrum T was set to a Gaussian shape, and a spectrum width was set to 5 nm. The intermediate wavelength between the first wavelength and the second wavelength was set to 1550 nm, and the difference between the first wavelength and the second wavelength was set to 20 nm. The time difference between the first light pulse and the second light pulse was set to 5 ps.

As shown in this graph, the wavelength dispersion measurement error is substantially proportional to the RMS error. As an example, in the case in which the measurement accuracy with the wavelength dispersion measurement error of 5% or less is required, the spectrum shape of the light pulse after the optical amplifier may be improved by the feedback until the RMS error becomes 0.2 or less.

A wavelength dispersion measurement method performed by using the wavelength dispersion measurement apparatus 1C is as follows. The wavelength dispersion measurement method is roughly divided into an adjusting step for adjusting the generation of the light pulse train by the light pulse train generation unit 20, and a measuring step for subsequently measuring the wavelength dispersion of the sample S. In the adjusting step, the sample S may be placed on the optical path between the light pulse train generation unit 20 and the optical amplifier 30, or the sample S may not be placed.

In the adjusting step, based on the light pulse having the wavelength band output from the light source 10, the light pulse train generation unit 20 generates and outputs the light pulse train including the first light pulse having the peak of the spectrum at the first wavelength and the second light pulse having the peak of the spectrum at the second wavelength (a light pulse train generation step). The light pulse train output from the light pulse train generation unit 20 is amplified and output by the optical amplifier 30 (an optical amplification step).

The spectrum of the light pulse train output from the optical amplifier 30 is measured by the spectrometer 60 (a spectrometry step). Further, the generation of the light pulse train by the light pulse train generation unit 20 is controlled such that, in the spectrum measured by the spectrometer 60, the spectrum shape of the first light pulse becomes symmetric with respect to the first wavelength, and further, the spectrum shape of the second light pulse becomes symmetric with respect to the second wavelength (a control step).

In the measuring step, based on the light pulse having the wavelength band output from the light source 10, the light pulse train generation unit 20 generates and outputs the light pulse train including the first light pulse having the peak of the spectrum at the first wavelength and the second light pulse having the peak of the spectrum at the second wavelength (the light pulse train generation step). The light pulse train output from the light pulse train generation unit 20 and propagated through the sample S is amplified and output by the optical amplifier 30 (the optical amplification step).

The time interval between the respective peaks of the first light pulse and the second light pulse is measured by the measurement unit 40 based on the shape of the autocorrelation of the temporal waveform of the light pulse train output from the optical amplifier 30 (a measurement step). Further, based on the time interval measured by the measurement unit 40, the wavelength dispersion of the sample S is determined (a computing step).

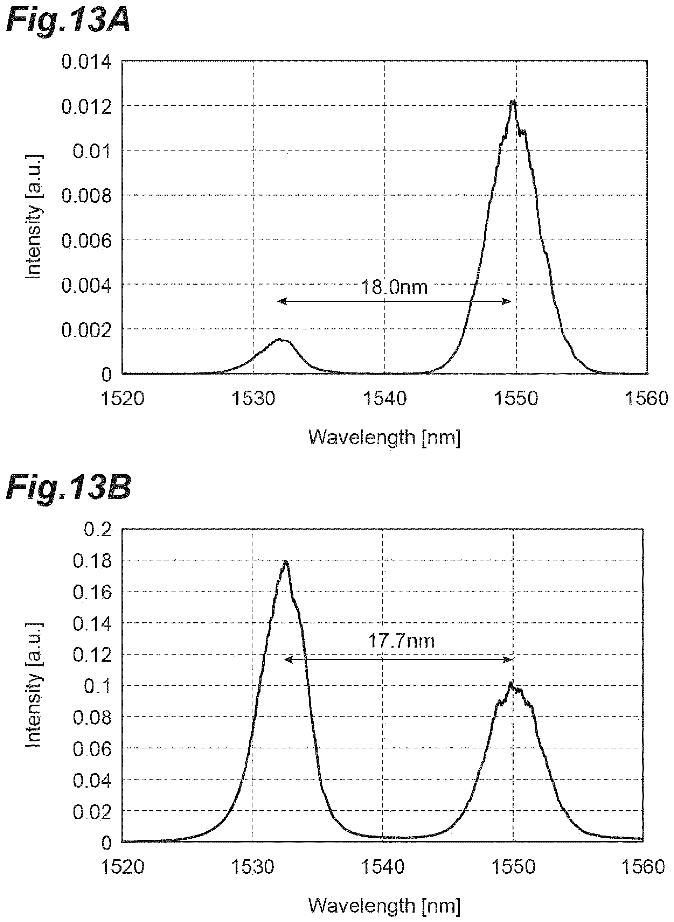

FIG. 13A to FIG. 15 are diagrams showing the results of the wavelength dispersion measurement performed by using the wavelength dispersion measurement apparatus 1C. In this case, the center wavelength of the light pulse train output from the light pulse train generation unit 20 was set to 1541 nm. The intensity of the light pulse train output from the light pulse train generation unit 20 was 5 μW. A polarization maintaining optical fiber of Thorlabs with a length of 5 m was used as the sample S. As the optical amplifier 30, EDFA100P of Thorlabs was used. The intensity of the light pulse train output from the optical amplifier 30 was 4.1 mW.

FIG. 13A is a diagram showing the spectrum of the light pulse train output from the light pulse train generation unit 20. The peak wavelength difference between the two light pulses output from the light pulse train generation unit 20 was 18.0 nm. FIG. 13B is a diagram showing the spectrum of the light pulse train output from the optical amplifier 30. The peak wavelength difference between the two light pulses output from the optical amplifier 30 was 17.7 nm.

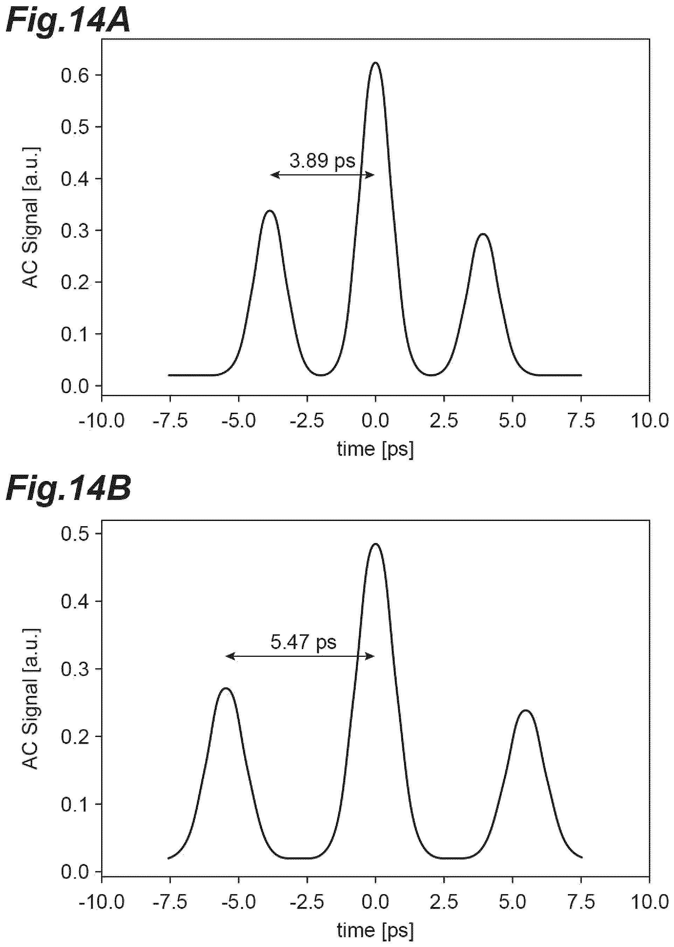

FIG. 14A is a diagram showing the shape of the autocorrelation of the temporal waveform of the light pulse train measured by the measurement unit 40 in the case in which the sample S is not placed. FIG. 14B is a diagram showing the shape of the autocorrelation of the temporal waveform of the light pulse train measured by the measurement unit 40 in the case in which the sample S is placed. In these diagrams, the horizontal axis indicates the time difference between the light pulse train Pba and the light pulse train Pbb which is set by the movement of the stage 47. The vertical axis indicates the output signal value from the photodetector 48.

When the sample S is not placed (that is, when the length of the polarization maintaining optical fiber as the sample S is 0), the time difference between the first light pulse and the second light pulse output from the optical amplifier 30 was 3.89 ps. On the other hand, when the polarization maintaining optical fiber with the length of 5 m was placed as the sample S, the time difference between the first light pulse and the second light pulse output from the optical amplifier 30 was 5.47 ps.

That is, by placing the polarization maintaining optical fiber with the length of 5 m, the time difference between the first light pulse and the second light pulse output from the optical amplifier 30 changed by 1.58 ps. From the above values, the measured value of the wavelength dispersion of the polarization maintaining optical fiber at the wavelength of 1541 nm of about 17.5 ps/nm/km was obtained.

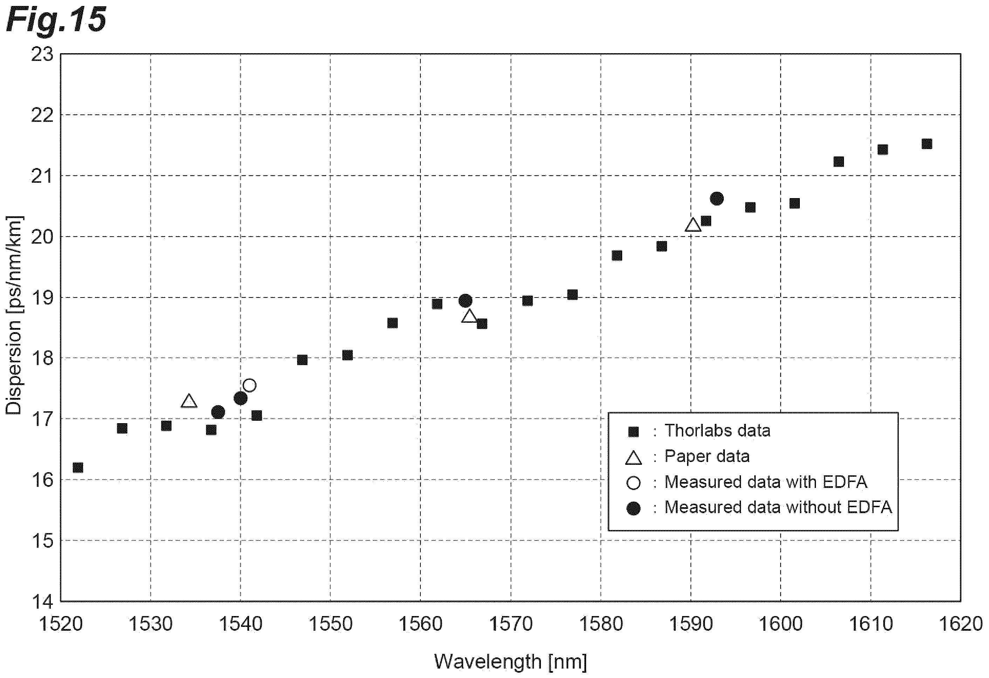

FIG. 15 is a graph showing the results of the wavelength dispersion measurement performed by using the wavelength dispersion measurement apparatus 1C. In this graph of FIG. 15, in addition to the measured data obtained by using EDFA100P as the optical amplifier 30, the measured data when the optical amplifier 30 was not used, the Thorlabs provided data, and the paper described data are also shown.

As shown in this graph, the measured data of the wavelength dispersion measurement performed by using EDFA100P as the optical amplifier 30 in the wavelength dispersion measurement apparatus 1C is in good agreement with the Thorlabs provided data and the paper described data, and further, also in good agreement with the measured data when the optical amplifier 30 was not used in the wavelength dispersion measurement apparatus 1C.

As described above, in the present embodiment, in order to measure the wavelength dispersion of the sample S in which the nonlinear optical phenomenon is likely to occur, the intensity of the light pulse train input to the sample S is made sufficiently small, and further, the optical amplifier 30 is provided for increasing the intensity of the light pulse train input to the measurement unit 40. In this case, the shape of the light pulse may change due to the wavelength dependence of the gain of the optical amplifier 30.

Even in the case described above, the control unit 70 controls the generation of the light pulse train by the spatial light modulator 23 such that, in the spectrum measured by the spectrometer 60, the spectrum shape of the first light pulse is symmetric with respect to the first wavelength $\lambda_1$, and the spectrum shape of the second light pulse is symmetric with respect to the second wavelength $\lambda_2$. By using the above configuration, the wavelength dispersion of the sample S can be measured accurately.

Further, regardless of whether the nonlinear optical phenomenon is likely to occur in the sample S, it becomes possible to use a wide band light source with low output intensity as the light source 10, and thus, the wavelength dispersion can be measured over a wider wavelength range.

When the control unit 70 controls the generation of the light pulse train by the spatial light modulator 23, it is preferable that, in addition to the configuration in which, in the spectrum measured by the spectrometer 60, the spectrum shape of the first light pulse is symmetric with respect to the first wavelength $\lambda_1$, and the spectrum shape of the second light pulse is symmetric with respect to the second wavelength $\lambda_2$, the intensity ratio of the respective peaks of the first light pulse and the second light pulse in the temporal waveform of the light pulse train output from the optical amplifier 30 is within a range of 1:10 to 10:1.

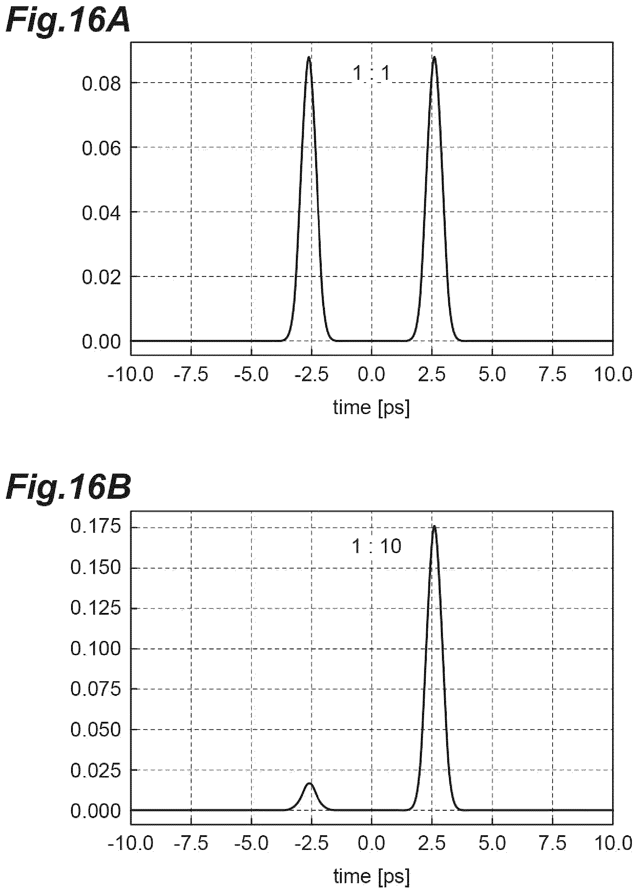

FIG. 16A and FIG. 16B are diagrams for describing the intensity ratio of the peaks of the first light pulse and the second light pulse in the temporal waveform of the light pulse train output from the optical amplifier 30. FIG. 16A shows the temporal waveform of the light pulse train in the case in which the peak intensity ratio is set to 1:1. FIG. 16B shows the temporal waveform of the light pulse train in the case in which the peak intensity ratio is set to 1:10. By setting the peak intensity ratio of the light pulse train output from the optical amplifier 30 and input to the measurement unit 40 within the above range, the shape of the autocorrelation of the temporal waveform of the light pulse train can be measured more accurately in the measurement unit 40. It is more preferable to set the peak intensity ratio within a range of 1:5 to 5:1.

Further, when the control unit 70 controls the generation of the light pulse train by the spatial light modulator 23, it is preferable to set the first wavelength and the second wavelength within a band out of the gain band of the optical amplifier 30 in which the wavelength dependence of the gain is relatively small.

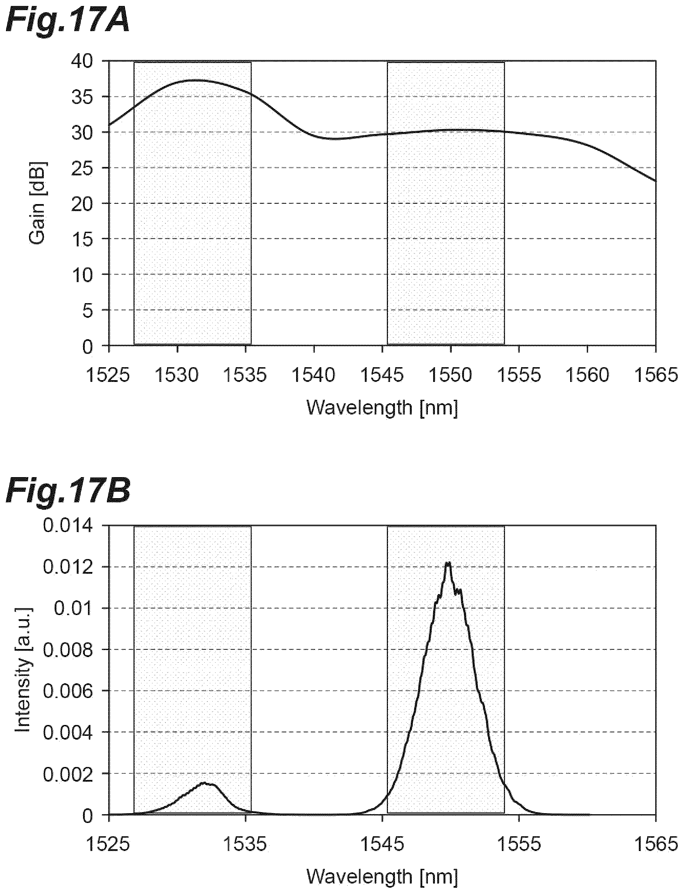

FIG. 17A and FIG. 17B are diagrams showing a relationship between the wavelength dependence of the gain of the optical amplifier 30 and the spectrum of each of the first light pulse and the second light pulse. In the example shown in FIG. 17A, the wavelength dependence of the gain of the optical amplifier 30 is relatively small in a range near a wavelength of 1532 nm and a range near a wavelength of 1550 nm. Therefore, as shown in FIG. 17B, it is preferable to set the peak wavelength (the first wavelength) of the spectrum of the first light pulse near the wavelength of 1532 nm, and it is preferable to set the peak wavelength (the second wavelength) of the spectrum of the second light pulse near the wavelength of 1550 nm.

The wavelength dispersion measurement apparatus and the wavelength dispersion measurement method are not limited to the embodiments and configuration examples described above, and various modifications are possible.

The wavelength dispersion measurement apparatus of a first aspect according to the above embodiment is a wavelength dispersion measurement apparatus for propagating a light pulse train including a first light pulse and a second light pulse having peak wavelengths different from each other through a sample, and measuring a wavelength dispersion of the sample based on a shape of an autocorrelation of a temporal waveform of the light pulse train after propagation or a shape of a cross-correlation between the temporal waveform of the light pulse train after propagation and a temporal waveform of a reference light pulse, and includes (1) a light source for outputting a light pulse having a wavelength band; (2) a light pulse train generation unit for generating and outputting, based on the light pulse output from the light source, a light pulse train including a first light pulse having a peak of a spectrum at a first wavelength within the wavelength band and a second light pulse having a peak of a spectrum at a second wavelength within the wavelength band; (3) an optical amplifier for amplifying and outputting the light pulse train output from the light pulse train generation unit; (4) a spectrometer for measuring a spectrum of the light pulse train output from the optical amplifier; and (5) a control unit for controlling generation of the light pulse train by the light pulse train generation unit such that, in the spectrum measured by the spectrometer, a spectrum shape of the first light pulse is symmetric with respect to the first wavelength, and a spectrum shape of the second light pulse is symmetric with respect to the second wavelength.

In the wavelength dispersion measurement apparatus of a second aspect, in the configuration of the first aspect, the apparatus may further include a measurement unit for measuring a time interval between the peaks of the first light pulse and the second light pulse, in a state in which the sample is placed such that the light pulse train output from the light pulse train generation unit is input to the optical amplifier after being propagated through the sample, based on a shape of an autocorrelation of a temporal waveform of the light pulse train output from the optical amplifier or a shape of a cross-correlation between the temporal waveform of the light pulse train output from the optical amplifier and a temporal waveform of a reference light pulse; and a computing unit for determining a wavelength dispersion of the sample based on the time interval measured by the measurement unit.

In the wavelength dispersion measurement apparatus of a third aspect, in the configuration of the first or second aspect, the control unit may control the generation of the light pulse train by the light pulse train generation unit such that an intensity ratio of the respective peaks of the first light pulse and the second light pulse in a temporal waveform of the light pulse train output from the optical amplifier is within a range of 1:10 to 10:1.

In the wavelength dispersion measurement apparatus of a fourth aspect, in the configuration of any one of the first to third aspects, the control unit may control the generation of the light pulse train by the light pulse train generation unit such that the spectrum shape of each of the first light pulse and the second light pulse is set to a Gaussian shape, a sech-type shape, or a hyper-Gaussian shape.

In the wavelength dispersion measurement apparatus of a fifth aspect, in the configuration of any one of the first to fourth aspects, the optical amplifier may be an optical fiber amplifier or a semiconductor optical amplifier.

The wavelength dispersion measurement method of a first aspect according to the above embodiment is a wavelength dispersion measurement method for propagating a light pulse train including a first light pulse and a second light pulse having peak wavelengths different from each other through a sample, and measuring a wavelength dispersion of the sample based on a shape of an autocorrelation of a temporal waveform of the light pulse train after propagation or a shape of a cross-correlation between the temporal waveform of the light pulse train after propagation and a temporal waveform of a reference light pulse, and includes (1) a light pulse train generation step of generating and outputting, by a light pulse train generation unit, based on a light pulse having a wavelength band output from a light source, a light pulse train including a first light pulse having a peak of a spectrum at a first wavelength within the wavelength band and a second light pulse having a peak of a spectrum at a second wavelength within the wavelength band; (2) an optical amplification step of amplifying and outputting, by an optical amplifier, the light pulse train output from the light pulse train generation unit; (3) a spectrometry step of measuring, by a spectrometer, a spectrum of the light pulse train output from the optical amplifier; and (4) a control step of controlling generation of the light pulse train by the light pulse train generation unit such that, in the spectrum measured by the spectrometer, a spectrum shape of the first light pulse is symmetric with respect to the first wavelength, and a spectrum shape of the second light pulse is symmetric with respect to the second wavelength.

In the wavelength dispersion measurement method of a second aspect, in the configuration of the first aspect, the method may further include a measurement step of measuring a time interval between the peaks of the first light pulse and the second light pulse, in a state in which the sample is placed such that the light pulse train output from the light pulse train generation unit is input to the optical amplifier after being propagated through the sample, based on a shape of an autocorrelation of a temporal waveform of the light pulse train output from the optical amplifier or a shape of a cross-correlation between the temporal waveform of the light pulse train output from the optical amplifier and a temporal waveform of a reference light pulse; and a computing step of determining a wavelength dispersion of the sample based on the time interval measured in the measurement step.

In the wavelength dispersion measurement method of a third aspect, in the configuration of the first or second aspect, in the control step, the generation of the light pulse train by the light pulse train generation unit may be controlled such that an intensity ratio of the respective peaks of the first light pulse and the second light pulse in a temporal waveform of the light pulse train output from the optical amplifier is within a range of 1:10 to 10:1.

In the wavelength dispersion measurement method of a fourth aspect, in the configuration of any one of the first to third aspects, in the control step, the generation of the light pulse train by the light pulse train generation unit may be controlled such that the spectrum shape of each of the first light pulse and the second light pulse is set to a Gaussian shape, a sech-type shape, or a hyper-Gaussian shape.

In the wavelength dispersion measurement method of a fifth aspect, in the configuration of any one of the first to fourth aspects, in the optical amplification step, an optical fiber amplifier or a semiconductor optical amplifier may be used as the optical amplifier.

The embodiments can be used as a wavelength dispersion measurement apparatus and a wavelength dispersion measurement method capable of accurately measuring a wavelength dispersion even for a sample in which a nonlinear optical phenomenon is likely to occur.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

**Claims**

1. A wavelength dispersion measurement apparatus for propagating a light pulse train including a first light pulse and a second light pulse having peak wavelengths different from each other through a sample, and measuring a wavelength dispersion of the sample based on a shape of an autocorrelation of a temporal waveform of the light pulse train after propagation or a shape of a cross-correlation between the temporal waveform of the light pulse train after propagation and a temporal waveform of a reference light pulse, the apparatus comprising:

   a light source for outputting a light pulse having a wavelength band;
   a light pulse train generation unit for generating and outputting, based on the light pulse output from the light source, a light pulse train including a first light pulse having a peak of a spectrum at a first wavelength within the wavelength band and a second light pulse having a peak of a spectrum at a second wavelength within the wavelength band;
   an optical amplifier for amplifying and outputting the light pulse train output from the light pulse train generation unit;
   a spectrometer for measuring a spectrum of the light pulse train output from the optical amplifier; and
   a control unit for controlling generation of the light pulse train by the light pulse train generation unit such that, in the spectrum measured by the spectrometer, a spectrum shape of the first light pulse is symmetric with respect to the first wavelength, and a spectrum shape of the second light pulse is symmetric with respect to the second wavelength.

2. The wavelength dispersion measurement apparatus according to Claim 1, further comprising:

   a measurement unit for measuring a time interval between the peaks of the first light pulse and the second light pulse, in a state in which the sample is placed such that the light pulse train output from the light pulse train generation unit is input to the optical amplifier after being propagated through the sample, based on a shape of an autocorrelation of a temporal waveform of the light pulse train output from the optical amplifier or a shape of a cross-correlation between the temporal waveform of the light pulse train output from the optical amplifier and a temporal waveform of a reference light pulse; and
   a computing unit for determining a wavelength dispersion of the sample based on the time interval measured by the measurement unit.

3. The wavelength dispersion measurement apparatus according to Claim 1 or 2, wherein the control unit controls the generation of the light pulse train by the light pulse train generation unit such that an intensity ratio of the peaks of the first light pulse and the second light pulse in a temporal waveform of the light pulse train output from the optical amplifier is within a range of 1:10 to 10:1.

4. The wavelength dispersion measurement apparatus according to any one of Claims 1 to 3, wherein the control unit controls the generation of the light pulse train by the light pulse train generation unit such that the spectrum shape of each of the first light pulse and the second light pulse is set to a Gaussian shape, a sech-type shape, or a hyper-Gaussian shape.

5. The wavelength dispersion measurement apparatus according to any one of Claims 1 to 4, wherein the optical amplifier is an optical fiber amplifier or a semiconductor optical amplifier.

6. A wavelength dispersion measurement method for propagating a light pulse train including a first light pulse and a second light pulse having peak wavelengths different from each other through a sample, and measuring a wavelength dispersion of the sample based on a shape of an autocorrelation of a temporal waveform of the light pulse train after propagation or a shape of a cross-correlation between the temporal waveform of the light pulse train after propagation and a temporal waveform of a reference light pulse, the method comprising:

   a light pulse train generation step of generating and outputting, by a light pulse train generation unit, based on a light pulse having a wavelength band output from a light source, a light pulse train including a first light pulse having a peak of a spectrum at a first wavelength within the wavelength band and a second light pulse having a peak of a spectrum at a second wavelength within the wavelength band;
   an optical amplification step of amplifying and outputting, by an optical amplifier, the light pulse train output from the light pulse train generation unit;
   a spectrometry step of measuring, by a spectrometer, a spectrum of the light pulse train output from the optical amplifier; and
   a control step of controlling generation of the light pulse train by the light pulse train generation unit such that, in the spectrum measured by the spectrometer, a spectrum shape of the first light pulse is symmetric with respect to the first wavelength, and a spectrum shape of the second light pulse is symmetric with respect to the second wavelength.

7. The wavelength dispersion measurement method according to Claim 6, further comprising:

   a measurement step of measuring a time interval between the peaks of the first light pulse and the second light pulse, in a state in which the sample is placed such that the light pulse train output from the light pulse train generation unit is input to the optical amplifier after being propagated through the sample, based on a shape of an autocorrelation of a temporal waveform of the light pulse train output from the optical amplifier or a shape of a cross-correlation between the temporal waveform of the light pulse train output from the optical amplifier and a temporal waveform of a reference light pulse; and
   a computing step of determining a wavelength dispersion of the sample based on the time interval measured in the measurement step.

8. The wavelength dispersion measurement method according to Claim 6 or 7, wherein in the control step, the generation of the light pulse train by the light pulse train generation unit is controlled such that an intensity ratio of the peaks of the first light pulse and the second light pulse in a temporal waveform of the light pulse train output from the optical amplifier is within a range of 1:10 to 10:1.

9. The wavelength dispersion measurement method according to any one of Claims 6 to 8, wherein in the control step, the generation of the light pulse train by the light pulse train generation unit is controlled such that the spectrum shape of each of the first light pulse and the second light pulse is set to a Gaussian shape, a sech-type shape, or a hyper-Gaussian shape.

10. The wavelength dispersion measurement method according to any one of Claims 6 to 9, wherein in the optical amplification step, an optical fiber amplifier or a semiconductor optical amplifier is used as the optical amplifier.

**Fig.1**

Fig.2

*Fig.3*

# Fig.4

EP 4 715 348 A1

Fig.5

Fig.6

EP 4 715 348 A1

# Fig.7

Fig.8

**Fig.9**

1C

# Fig.10

START

MEASURE SPECTRUM L
OF LIGHT SOURCE 10    ~S1

DETERMINE TARGET SPECTRUM T    ~S2

INITIALLY DESIGN AMPLITUDE
MODULATION PATTERN $M_0$    ~S3

SET AMPLITUDE MODULATION
PATTERN $M_i$ ON MODULATION PLANE
OF SPATIAL LIGHT MODULATOR 23    ~S4

MEASURE SPECTRUM $S_i$
BY SPECTROMETER 60    ~S5

END CONDITION?    S6 → END

UPDATE AMPLITUDE MODULATION
PATTERN $M_i$ TO $M_{i+1}$    ~S7

## Fig.11

## Fig.12

$y = 0.0415x$

Wavelength dispersion measurement error [%]

## Fig.13A

## Fig.13B

## Fig.14A

## Fig.14B

Fig.15

## Fig.16A

## Fig.16B

## Fig.17A

## Fig.17B

EP 4 715 348 A1

**Fig.18**

Europäisches
Patentamt

European
Patent Office

Office européen
des brevets

# EUROPEAN SEARCH REPORT

**Application Number**

EP 25 20 0179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/203853 A1 (HAMAMATSU PHOTONICS KK [JP]) 8 October 2020 (2020-10-08) * figures 1,2,7 * ----- | 1,6 | INV. G01J3/02 G01J3/10 G01J3/12 G01J11/00 |
| A | US 2022/107221 A1 (WATANABE KOYO [JP] ET AL) 7 April 2022 (2022-04-07) * figures 1,2 * ----- | 1,6 | |
| A | JP 2006 071351 A (OKI ELECTRIC IND CO LTD) 16 March 2006 (2006-03-16) * figure 3 * * paragraphs [0029] - [0032] * ----- | 1,6 | |

| | |
|---|---|
| | TECHNICAL FIELDS SEARCHED (IPC) |
| | G01J G01M |

The present search report has been drawn up for all claims

| Place of search | Date of completion of the search | Examiner |
|---|---|---|
| Munich | 6 February 2026 | Jacquin, Jérôme |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 0179

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2026

| Patent document cited in search report | | Publication date | Patent family member(s) | | Publication date |
|---|---|---|---|---|---|
| WO 2020203853 A1 | | 08-10-2020 | CN | 113661382 A | 16-11-2021 |
| | | | CN | 119573897 A | 07-03-2025 |
| | | | EP | 3951337 A1 | 09-02-2022 |
| | | | JP | 7184700 B2 | 06-12-2022 |
| | | | JP | 7339416 B2 | 05-09-2023 |
| | | | JP | 2020169946 A | 15-10-2020 |
| | | | JP | 2023015388 A | 31-01-2023 |
| | | | US | 2022178752 A1 | 09-06-2022 |
| | | | US | 2024003744 A1 | 04-01-2024 |
| | | | US | 20260029278 A1 | 29-01-2026 |
| | | | WO | 2020203853 A1 | 08-10-2020 |
| US 2022107221 A1 | | 07-04-2022 | JP | 7449214 B2 | 13-03-2024 |
| | | | JP | 2022059944 A | 14-04-2022 |
| | | | JP | 2024052923 A | 12-04-2024 |
| | | | US | 2022107221 A1 | 07-04-2022 |
| | | | US | 2024110833 A1 | 04-04-2024 |
| JP 2006071351 A | | 16-03-2006 | JP | 4025324 B2 | 19-12-2007 |
| | | | JP | 2006071351 A | 16-03-2006 |

EPO FORM P0459

For more details about this annex : see Official Journal of the European Patent Office, No. 12/82

**EP 4 715 348 A1**

**Patent documents cited in the description**

- JP 2020169946 A

**Non-patent literature cited in the description**

- **THORLABS, INC**. *Erbium-Doped Fiber Amplifiers (EDFA)*, 02 August 2024, https://www.thorlabs.cojp/-newgrouppage9.cfm?objectgroup_id=10680 &pn=EDFA100P>